# EUROPEAN PATENT APPLICATION

(11) **EP 4 715 226 A1**
(43) Date of publication of application: **25.03.2026**
(21) Application number: 24201146.8
(22) Date of filing: 18.09.2024
(51) Int. Cl.: F16B 5/04, F16B 19/10, F16B 21/08

(54) **SINGLE-PIECE CONNECTION DEVICE FOR CONNECTING PARTS SUCH AS TWO METAL OR PLASTIC SHEET PARTS**

(71) Applicant: HellermannTyton AB, 16440 Kista (SE)
(72) Inventor: Otterström, Måns, 42737 Billdal (SE)
(74) Representative: Hernandez, Yorck

(57) **Abstract**

The disclosure relates to an one-piece connection device (1) for connecting two or more parts (5, 6), in particular metal and/or plastic sheet parts, via insertion of the one-piece connection device (1) into aligned through-holes (5', 6') of said parts (5, 6), with a rivet part (2) with a head element (2a) and a predetermined number of rib elements (2b, 2b', 2b", 2b‴) extending from the head element (2a) along an insertion direction (I) of the one-piece connection device (1), where the rib elements (2b, 2b', 2b", 2b‴) determine an outer diameter (do) of the rivet part (2); with a clip-body part (3) with a flange element (3a) and flank elements (3b, 3b', 3b", 3b‴) of said predetermined number, the flank elements (3b, 3b', 3b", 3b‴) extending from the flange element (3a) along said insertion direction (I), where the flank elements (3b, 3b', 3b", 3b‴) have respective snap-in structures (3d, 3d', 3d", 3d‴) on their respective outer sides, and where respective inner sides (3bx, 3bx") of the flank elements (3b, 3b', 3b", 3b‴) determine an inner diameter (di) of the clip-body part (3), which inner diameter (di) corresponds to the outer diameter (do) of the rivet part (2); and with a connection part (4) that connects a lower portion (R3) of the rivet part (2), the lower portion (R3) of the rivet part (2) being a portion remote from the head element (2a), with an upper portion (C1) of the clip-body part (3), the upper portion (C1) of the clip-body part (3) being a portion comprising the flange element (3a); where the connection part (4) is designed as a predetermined breaking point for a movement of the rivet part (2) relative to the clip-body part (3) along said insertion direction (I) in order to provide an improved, in particular more ergonomic connection device (1).

## Description

### Field of the invention

The disclosure relates to a one-piece connection device for connecting two or more parts, in particular metal and/or plastic sheet parts, via insertion of the one-piece connection device into aligned through-holes of said parts which comprises a rivet part with a (rivet) head element and a predetermined number of (rivet) rib elements extending from the head element along an insertion direction of the one-piece connection device.

### Background

Standard connection devices either comprise two (or more) separate parts, such as screw and nut, or a single part, such as a rivet. In both cases, the known approaches require at least two assembly steps from an operator to connect the parts by means of the connection device. The operator also has to change position between the different assembly steps. In addition, current one-piece (aka single-piece) connection devices also have quite a high assembly force, usually above 50N. As a consequence, a high pressure per area (N/mm²) is required form the operator.

The technical task, therefore, is to provide an improved, in particular more ergonomic connection device, i.e. a connection device that is easier to handle while still providing a reliable connection of two or more parts.

### Overview

This task is solved by the objects of the independent claims. Advantageous embodiments will be apparent from the dependent claims, the description and the figures.

One aspect relates to a one-piece connection device for connecting two or more parts, in particular metal and/or plastic sheet parts, via insertion of the one-piece connection device into aligned through-holes of said parts. Thus, the connection device is one single piece, preferably made from a single material. The connection device may be injection-mold, e.g. from plastic. So the number of separate parts is minimized, which contributes to easy handling.

The one-piece connection device comprises a rivet part, a clip-body part, and a connection part connecting rivet and clip-body part.

The rivet part has a (rivet) head element and a predetermined number of (rivet) rib elements extending from the (rivet) head element along an insertion direction of the one-piece connection device. The (rivet) rib elements determine an outer diameter of the rivet part at least in a middle and/or a lower portion of the rivet part. The diameter is measured perpendicular to the insertion direction. The insertion direction runs along a central axis of the one-piece connection element, i.e. a main extension direction of the one-piece connection element (in a delivery condition, i.e. in unassembled condition).

The clip-body part has a (body) flange element and (clip) flank elements of said predetermined number, i.e. the same number as the number of the rib elements. The (clip) flank elements extend from the (body) flange element along said insertion direction. The (clip) flank elements have respective snap-in structures on their respective outer sides. The outer sides may be oriented radially outwardly, i.e. away from the central axis. Respective inner sides of the (clip) flank elements determine an inner diameter of the clip-body part. Consequently, they may be oriented radially inwardly, i.e. towards the central axis. The inner diameter of the clip-body part corresponds to the outer diameter of the rivet part such that the rivet part may slide into the clip-body part.

The connection part connects, in delivery thus unassembled condition, a lower portion of the rivet part, the lower portion of the rivet part being a portion remote from the (rivet) head element, with an upper portion of the clip-body part, the upper portion of the clip-body part being a portion comprising the (body) flange element. Furthermore, the rivet part may have an upper portion comprising the head element and/or a middle portion between lower and upper portion. Preferably the middle portion covers a major share of the overall extension of the rivet part along the insertion direction, e.g. at least 50% or at least 80% or at least 95%. The clip-body part may have an lower portion comprising an end of the (clip) flank elements and/or a middle portion between lower and upper portion. Preferably the middle portion covers a major share of the overall extension of the clip-body part along the insertion direction, e.g. at least 50% or at least 80% or at least 95%. The connection part is designed as a predetermined breaking point for a movement of the rivet part relative to the clip-body part along said insertion direction. Preferably, the rivet part is held by the connection part such that a central axis of the rivet part runs parallel or is at least essentially aligned with a central axis of the clip-body part. Consequently, central axis of rivet part, of clip-body part and of the connection device may be aligned. Preferably the central axes run along the insertion direction.

This has the technical effect that in delivery condition, i.e. prior to and during an essential part of assembly, the one-piece connection device only consists of one single piece, which is easy to handle in packaging and an initial part of the assembly, i.e. inserting the connection device into aligned through-holes. At the same time, during a subsequent part of the assembly, the predetermined breaking point allows the rivet part to separate from the clip-body part and slide along the inner sides of the flank elements into an inner space of the clip-body part, thereby mechanically stabilizing the clip-body part, in particular the flank elements against deformation due to the adaptation of inner clip-in body part diameter and outer rivet part diameters. This allows the clip-body part, in particular its flank elements, to be more flexible than in known solutions while maintaining connection reliability, this enhanced flexibility reducing the forces required during assembly. The described arrangement of the connection part at lower rivet part portion and upper clip-body part portion can ensure that the lower portion of the rivet part, in particular the ends of the rib elements that are remote from the head element, are arranged at an opening or mouth of said inner space of the clip-in part. Consequently, inserting the connection device into said aligned holes along the insertion direction and simply pushing the rivet part further into the insertion direction after the clip-in body part is arranged in the aligned through-holes automatically leads to said sliding of the rivet part into the clip-in body part and the stabilization of the connection without additional assembly steps or operator position change in the assembled state. Therefore, the rivet part may also be referred to as stabilizing part or stabilizing rivet part. So the rivet part, in particular the rib elements, may be less flexible, in particular along the insertion direction, than the clip-body part, in particular the flank elements. This reliable assembly is achieved by a linear and/or one-dimensional movement along the insertion direction, which greatly enhances ergonomics.

Summarizing, an improved connection device requiring less assembly force, less pressure per area, less parts, less assembly steps, and less operator position changes, i.e. a more ergonomic connection device is provided without loss of connection device reliability.

In one embodiment, it is provided that a main extension direction (which may be referred to as "length") of the rib elements is along the insertion direction, and the rib elements merge in a central axial area of the rivet part, which central axial area extends mainly along said insertion direction and comprises the central axis of the one-piece connection device. This has the effect of an improved stability of the rib elements, ensuring reliable sliding into the clip-body part and reliability of the connection device in the assembled state.

In another embodiment, it is provided that the rib elements extend in a radial direction (which may be referred to as "thickness"), in particular from said central axial area, more than they extend in a circumferential direction (which may be referred to as "width") that runs across the insertion direction and the radial direction. This further enhances stability of the rib elements with respect to the relevant force to be expected and absorbed by the rib elements in the assembled state.

In a further embodiment, it is provided that at least along a circle with a radius corresponding to the outer diameter of the rivet part, the rib elements are separated one from another. In particular, this may be true for the middle and/or lower portion of the rivet part. This gives space for a particularly advantageous design of the connection part and improves the stability-per-weight ratio, thus contributing to easy handling.

In one embodiment, it is provided that the rib elements comprise a respective support surface that is orientated outwardly and that is configured to abut the corresponding inner side of the respective flank elements in an assembled condition, preferably with at least one pair, in particular two pairs, of support surfaces of different rib elements being orientated oppositely. This abutment, i.e. the mechanical contact of rivet part and clip-body part, further promotes stability. The opposite orientation of pairs of support surfaces allows to dissipate forces acting on the rivet part from the clip-body part back into the clip-body part, and ultimately into the connected parts surrounding the clip-body part. This again contributes to stability and reliability of the connection device.

In another embodiment, it is provided that the predetermined number of rib elements and flank elements is at least two, preferably at least four, in particular exactly four. This results in a particular high stability, and advantageously interacts with the features described in the last paragraphs.

In a further embodiment, it is provided that the connection part comprises a number of (connection) bridge elements, preferably (connection) bridge elements of said predetermined number, with each (connection) bridge element connecting rivet part and clip-body part, in particular with the (connection) bridge elements mainly extending in the radial direction. Preferably, the number of (connection) bridge elements is greater than one. This has the advantage that the rivet part can be arranged with improved precision at the mouth of the clip-body part, leading to easy handling and improved reliability.

In one embodiment, it is provided that the snap-in structures on the outer sides of the flank elements comprise at least two, preferably at least three or at least four, lamella elements that are configured for preventing or at least hindering a movement of the clip-body part in the assembled condition in a direction opposite to the insertion direction. The lamella elements act similar to a barb. Preferably, the number of lamella elements is chosen such that at least two lamella elements are, in the assembled state, pushed completely through said through-hole of the metal/plastic parts to be connected, and/or at least one other lamella element, preferably also at least two other lamella elements, are arranged in said through-hole. This results in a particular stable connection, with reduced clearance, thus improved reliability and better handling.

In another embodiment, it is provided that the flank elements are separated one from another in a middle portion of the clip-body part, which middle portion is arranged, along the insertion direction, between the upper portion and a lower portion of the clip-body part, which lower portion of the clip-body part is a portion remote from the flange element, preferably with the middle portion covering a major share of the overall extension of the clip-body part along the insertion direction. This gives the advantage of improved flexibility of the flank elements, thus easier handling and improved reliability.

In a further embodiment, it is provided that the flank elements, preferably all flank elements, are connected, at the lower portion of the clip-body part, by a connector element. The connector element may have a main extension plane running perpendicular to the insertion direction. The connector element may be a ring connector element. It may comprise a through-hole through which the central axis runs. This gives the advantage that stability of the connection device is improved in both delivery condition and assembled condition, while a high flexibility is maintained for the flank elements (in the relevant middle section).

In one embodiment, it is provided that the flank elements extend, in the circumferential direction (which may be referred to as "width"), more than they extend in the radial direction (which may be referred to as "thickness"). This advantageously contributes to the flexibility of the flanks, thus improves handling of the connection device.

In another embodiment, it is provided that a diameter of the head element is larger than a diameter of the flange element, the diameter being measured perpendicular to the insertion direction. This not only reduces the required pressure per area but also allows the head element to cover the flange element completely in the assembled condition. This hinders unintended interaction of loose parts with the connection device and thus contributes to reliability of the connection device.

In a further embodiment, it is provided that at least one of the rib elements, preferably at least or exactly two of the rib elements, comprise, at their lower portion, respective hook protrusions that are configured to hook into the clip-body part, in particular the connector element, at a predetermined position in the assembled condition (i.e. when the rivet part is fully pushed into the clip-body part). This further enhances reliability through mechanical fixation of the rivet part in the clip-body part.

Therein, it may be provided that the clip-body part, in particular the connector element, comprises, at a release position, which is offset from the predetermined position in the circumferential direction, at least one recess, preferably at least or exactly two recesses, that allows the hook protrusion to unhook from the clip-body part, in particular the connector element, when the rivet part is rotated along the circumferential direction such that the hook protrusion is moved from the predetermined position to the release position. This gives the effect that the connection device can be loosened through rotation around the central axis (i.e. "unscrewed") in the sense that the mechanical fixation described in the last paragraph may be canceled by the rotation of the rivet part relative to the clip-in part, so that first the rivet part and then the clip-body part may be pulled out in said direction opposite to the insertion direction. Note that the lamella elements and/or the separation of the flanks elements help against unintended co-rotation of the clip-body part when the rivet part is rotated.

A further aspect relates to a method for connecting two or more parts, in particular metal and/or plastic sheet parts, by means of a one-piece connection device. One method step is inserting the one-piece connection device into at least essentially aligned through-holes of said parts along an insertion direction, with a first push-in force, until a first part of the one-piece connection device abuts one of the parts to be connected. This first part may be a clip-body part of the connection device. Preferably the abutting element of the clip-body part is the flange element described above. Another method step is pushing at least a rivet part of the one-piece connection device further along the insertion direction with a second push-in force. The second push-in force is greater than the first push-in force, with the rivet part of the one-piece connection device breaking apart from the clip-body part of the one-piece connection device due to the pushing. Initially (i.e. in a delivery condition) the rivet part may be connected to the clip-body part via a connection part. The connection part is then designed as predetermined breaking point, i.e. to withstand the first push-in force, but to break apart at the second push-in force. A subsequent step is sliding the rivet part of the one-piece connection device at least partly into the clip-body part of the one-piece connection device along the insertion direction, preferably until an element such as the head element described above abuts the clip-body part, e.g. the flange element. Since inserting of the connection device and pushing further and sliding of the rivet part are part of a movement in the same (insertion) direction, a one-dimensional movement, the method may also be referred to as a one-dimensional method. Thus, inserting and pushing and sliding may compose the connecting method. So the assembled state, i.e. reliable connection of two or more parts, may already be established by only the steps of inserting, pushing further, and sliding.

Advantages and advantageous embodiments of the latter aspects correspond to the advantages and advantageous embodiments described for the former aspect, and vice versa.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along" may be understood as "at least substantially perpendicular/parallel", i.e. " perpendicular/parallel" or "substantially perpendicular/parallel", i.e. perpendicular/parallel except for a predetermined deviation. The predetermined deviation can, for example, be at most 15°, preferably at most 5°, particularly preferably at most 3°. Accordingly, "oppositely oriented" may be understood in the context of the present disclosure as "at least substantially oppositely oriented" i.e. "at least substantially anti-parallel oriented". The orientation of a plane may be determined by its normal vector. The limitation "substantially" may also refer to a percentage predetermined maximum permissible deviation, for example at most 15%, preferably at most 5%, particularly preferably at most 3%.

### Detailed description

Example embodiments are described in more detail below with reference to schematic drawings. Therein
- Fig. 1: shows a perspective view on an example embodiment of a one-piece connection device for connecting two or more parts, in a delivery condition;
- Fig. 2: shows a bottom view on the embodiment of Fig. 1 indicating the sectional planes of Figs. 3, 4, and 5;
- Figs. 3A, 3B: show a first sectional view on the embodiment of Fig. 1;
- Figs. 4A, 4B: show a second sectional view on the embodiment of Fig. 1;
- Fig. 5: shows a third sectional view on the embodiment of Fig. 1;
- Fig. 6: shows a side view of the embodiment of Fig. 1 corresponding to the sectional view of Fig. 5;
- Fig. 7: shows a side view of the embodiment of Fig. 1 corresponding to the sectional view of Fig. 5, with the one-piece connection device in an assembled condition;
- Fig. 8: shows a perspective view on the assembled condition of Fig. 7;
- Figs. 9A, 9B: show further perspective views on the assembled condition of Fig. 7;
- Fig. 10: shows a bottom view on the assembled condition of Fig. 7;
- Fig. 11: shows the first sectional view of Figs. 3A, 3B in the assembled condition;
- Fig. 12: shows the third sectional view of Fig. 5 in the assembled condition;
- Figs. 13A, 13B: show the second sectional view of Figs. 4A, 4B in the assembled condition;
and
- Fig. 14: shows the sectional view of Fig. 5, where the connection device connects two parts.

In the figures, the same or functionally identical features are provided with the same reference signs.

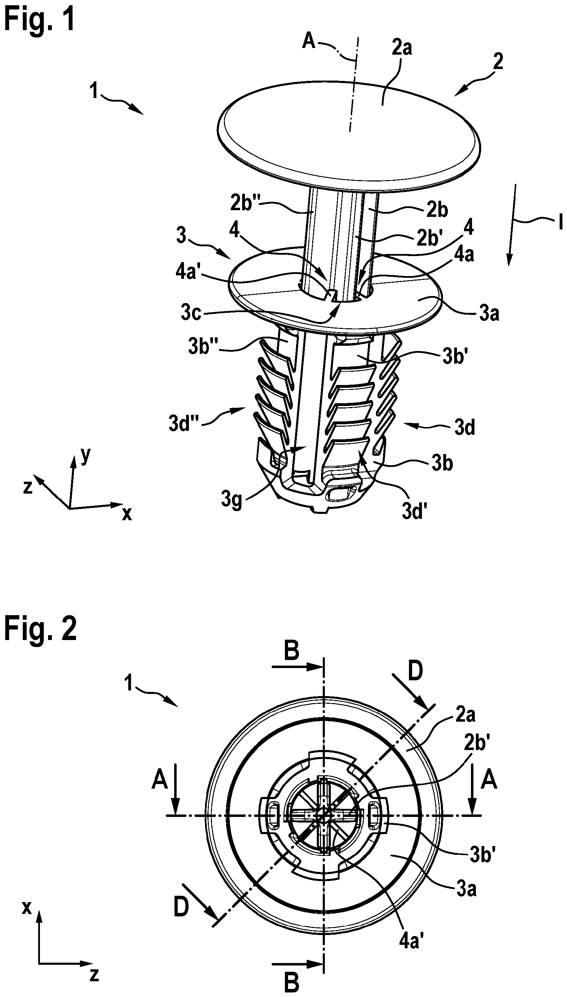

Fig. 1 shows a perspective view on an example embodiment of a one-piece connection device for connecting two or more parts, in a delivery, thus unassembled condition.

The one-piece connection device comprises 1 a rivet part 2, a clip-body part 3, and a connection part 4 connecting rivet part 2 and clip-body part 3.

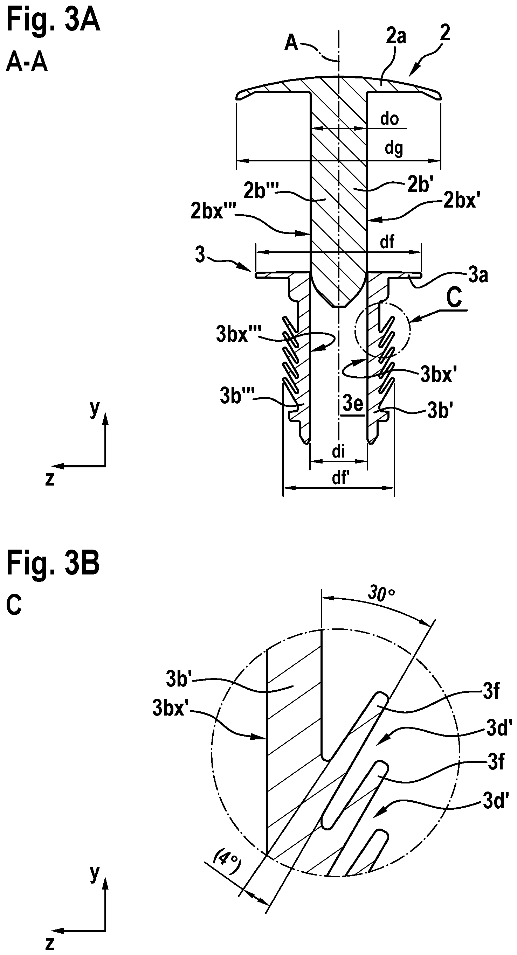

The rivet part has a (rivet) head element 2a and a predetermined number of in this case four (rivet) rib elements 2b, 2b', 2b" extending from the head element 2a along an insertion direction I (negative y-direction in this example) of the one-piece connection device 1. The rib elements 2b, 2b', 2b" determine an outer diameter do (Fig. 3A) of the rivet part 2 at least in a middle and/or a lower portion of the rivet part 2 (compare e.g. Fig. 3A). The insertion direction I runs along a central axis A of the one-piece connection element 1, i.e. along a main extension direction of the one-piece connection element 1 at least in the shown delivery condition.

The clip-body part 3 has a (body) flange element 3a and (clip) flank elements 3b, 3b', 3b" of said predetermined number, i.e. in this example four flank elements 3b, 3b', 3b" which correspond to the rib elements 2b, 2b', 2b". The flank elements 3b, 3b', 3b" extend from the flange element 3a along said insertion direction I. A diameter df (Fig. 3A) of the flange element 3a is greater than a diameter df' (Fig. 3A) of the rest of clip body part 3. Thus, when inserted into aligned through-holes, the flange element 3a can abut to parts that surround the connection device 1 and stop a (first) movement of (the clip-body part 3 of) the connection device 1 along the insertion direction I. The flange element 3a has a central opening or mouth 3c at which the rivet part 2 is arranged, as explained in the following.

The flank elements 3b, 3b', 3b" have respective snap-in structures 3d, 3d', 3d" on their respective outer sides. The outer sides are oriented radially outwardly here, i.e. away from the central axis A. Respective inner sides of the flank elements 3b, 3b', 3b" determine an inner diameter di (Fig. 3A) of the clip-body part 3 (compare e.g. Fig. 3A). Consequently, they are oriented radially inwardly here, i.e. towards the central axis A. The inner diameter of the clip-body part corresponds to the outer diameter of the rivet part such that the rivet part 2 may slide into the clip-body part 3 when pushed along the insertion direction I relative to the clip-body part 3. Note that the flank elements 3b, 3b', 3b" are separated one from another, leaving a space 3g.

This sliding of the rivet part 2 into the clip-body part 3 will happen during assembly when the clip-body part 3, i.e. the flange element 3a abuts to parts that surround the connection device 1, which stops said (first) movement of the clip-body part 3 along the insertion direction I.

In order to ensure the sliding as described above, the connection part 4 connects, in delivery thus unassembled condition, a lower portion (portion in negative y-direction here) of the rivet part 2, the lower portion of the rivet part 2 being a portion remote from the head element 2a, with an upper portion (portion in the positive y-direction here) of the clip-body part 3, the upper portion of the clip-body 3 part being a portion comprising the flange element 3a. Here, the connection part 4 comprises a number, in the present example four, of bridge elements 4a, 4a' which each connect rivet part 2 and clip-body part 3. The connection part 4 holds, in the present example, said lower portion at least partly in the mouth 3c. The connection part 4 is designed as a predetermined breaking point for a (second) movement of the rivet part 2 relative to the clip-body 3 part along said insertion direction I, i.e. as a breaking point that allows said sliding of rivet part 2 into the clip-body part 3 requiring a small force the amount of which can be set by the layout of the connection part 4.

The following figures illustrate additional details and/or details that have been described with reference to Fig. 1. Therein, Fig. 2 gives an overview of the orientations of the sectional views of Figs. 3-5 and 11-13.

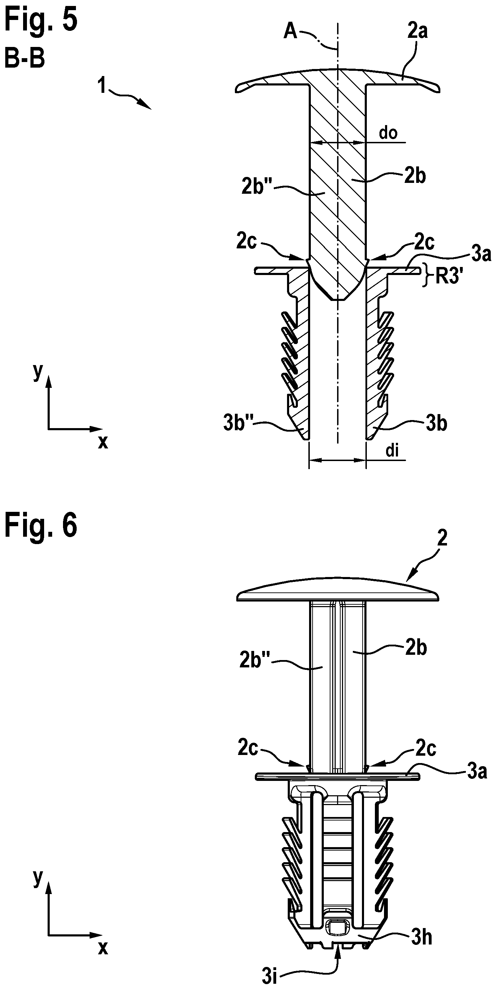

Fig. 3A with cross-section A-A of Fig. 2 shows that a main extension direction of the rib elements 2b, 2b', 2b" is along the insertion direction I (negative y-direction here). The rib elements 2b', 2b‴ merge in a central axial area, i.e. where the central axis A runs through, in this example. This is also true for the other two rib elements 2b, 2b", as apparent from Fig. 5. The outer diameter do is determined by the rib elements 2b, 2b', 2b", 2b‴ through their respective support surfaces 2bx', 2bx‴ that are orientated oppositely in this example and form one of two pair of support surfaces 2bx', 2bx‴ in this example. The inner diameter di is given by the inner flanks 3bx', 3bx‴ that delimit the inner space 3e with the mouth 3c. The inner space 3e is to receive (the rib elements 2b, 2b', 2b" of) the rivet part 2 when it is slid into the clip-body part 3.

Fig. 3B show the example design of the snap-in structure 3d'. The snap-in structure 3d' comprises lamella elements 3f that ensure the safe snapping in of the clip-body part 3. In the present example, there are five lamella elements 3f. They protrude in an exemplary angle of, in this example, 30° from the flank element 3b' here, which angle has proven particularly advantageous but may be altered. The lamella elements 3f may have upper and lower sides that converge towards theirs ends here, in the given example with a preset angle of exemplary 4°. These example values of 30° and 4°, respectively, may be adapted independently of other features of the described example, also independently of the respective other angle.

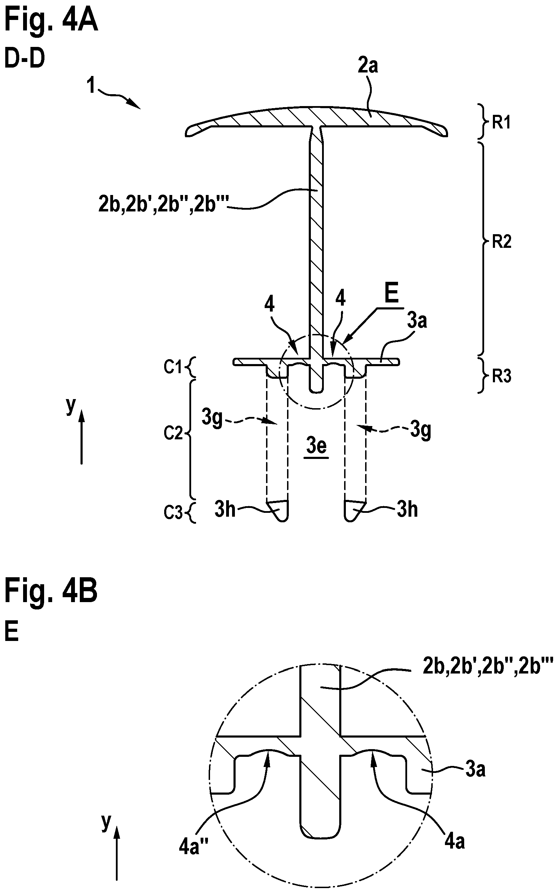

Fig. 4A with cross-section D-D of Fig. 2 illustrates the connection part 4 with its bridge elements 4a, 4a", and also shows the space 3g separating the different flank elements 3b, 3b". The connection part 4 connects the lower portion R3 of the rivet part 2 with the upper portion C1 of the clip-body part 3. In the present example, as also shown in Fig. 4B, the connection part 4 connects a central axial area of the rivet part 2, where the rib elements 2b, 2b', 2b", 2b‴ merge in the present example, with the clip-body part 3. Note the connector element 3h of this embodiment, which is formed as a ring connector element 3h connecting the different flank elements 3b, 3b', 3b", 3b‴ here.

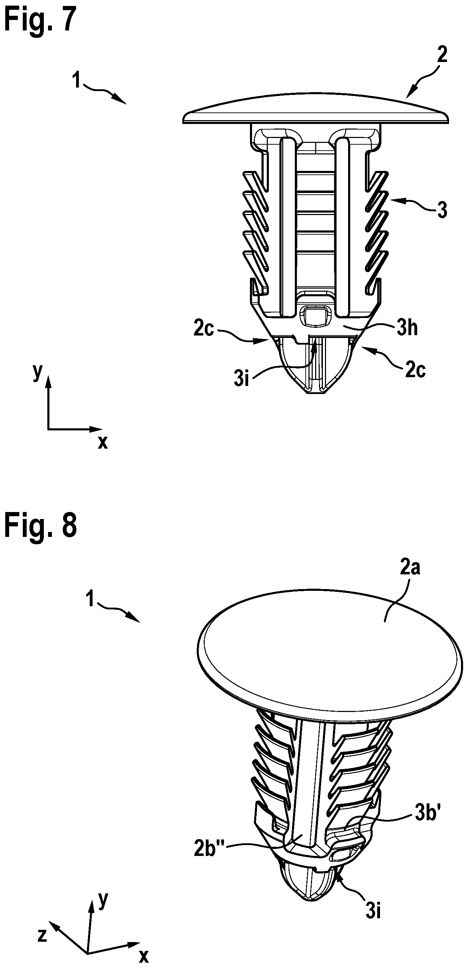

Fig. 5 with cross-section B-B of Fig. 2 illustrates the mainly symmetrical design of the shown example. However, the design is not completely symmetric in the present example: Some, here two out of four, of the rib elements 2b, 2b" comprise, at the lower portion R3' here, respective hook protrusions 2c that are configured to hook into the clip-body part 3, in particular the connector element 3h in the assembled condition (compare e.g. Fig. 7). Note that the lower portion R3, R3' may be defined differently, e.g. as the portion extending from the lower end of the rivet part 2 to the connector part 4, and/or to the hook protrusions 2c.

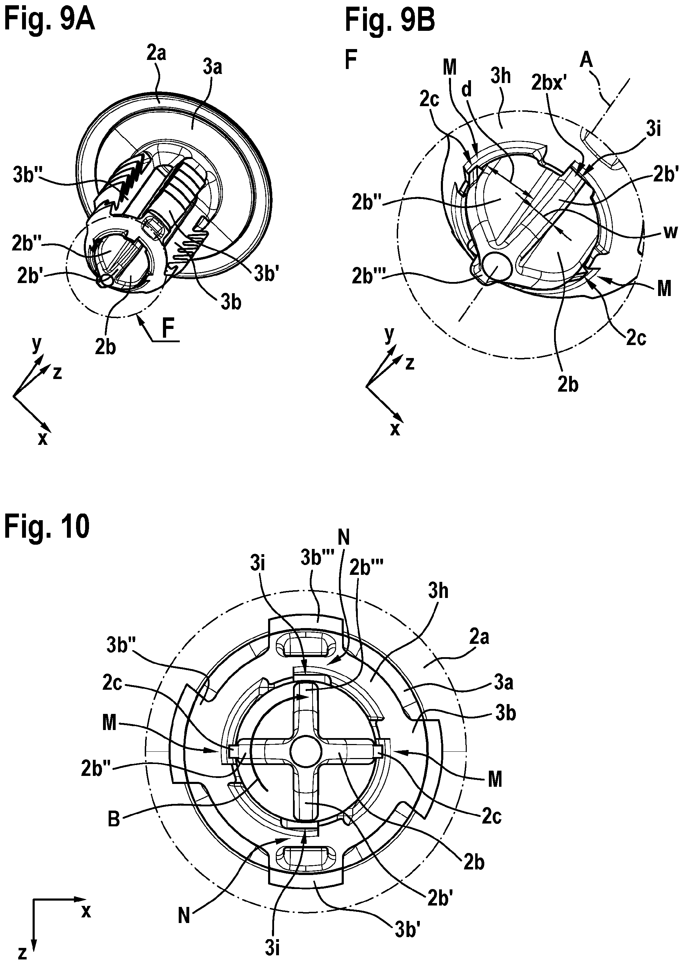

Fig. 6 shows a side view that corresponds to the sectional view of Fig. 5. The clip-body part comprises a recess 3i at a release position. This recess 3i allows to remove the rivet part 2 out of the inner space 3e in spite of the hook protrusions 2c, as explained in more detail in Fig. 10.

Fig. 7 corresponds to Fig. 6, but shows the connection device 1 in assembled condition, i.e. with the rivet part 2 completely inserted/pushed into clip-body part 3. The hook protrusions 2c have engaged with the connector element 3h and hinder the removal of the rivet part 2 in a direction opposite to the insertion direction I (i.e. in positive y-direction here).

Fig. 8 shows a perspective view on the connection device of Fig. 7. The diameter dg of the rivet head element 2a being larger than the diameter df of the flange element 3a allows the head element 2a to completely cover and protect the rest of the connection device1.

Fig. 9A shows the example of the two prior figures in a perspective view from the bottom. Fig. 9B enlarges some details of Fig. 9A. The rib elements 2b, 2b', 2b", 2b‴ extend, in the present example, in a radial direction with a depth d that is larger than a width w of the rib elements 2b, 2b', 2b", 2b‴ that is defined by an extension of the elements 2b, 2b', 2b", 2b‴ in a circumferential direction. The width w also determines the size of the support surfaces 2bx', in conjunction with a length of the rib elements 2b, 2b', 2b", 2b‴. Note that the hook protrusions 2c have engaged with the clip-body part 3, i.e. the connector element 3h here, at a predefined position M.

Fig. 10 illustrates the unlocking of the rivet part 2 from the clip-body part 3 by a rotation the rivet part 2 relative to the clip-body part 3 in a circumferential direction as indicated by arrow B. Namely since the recesses 3i are arranged at release positions N, a rotation of the hook protrusions 2c in the circumferential direction lets the hook protrusions 2c glide along the clip-body part 3, here the connector element 3h, from predetermined positions M to release positions N. Due to the recesses 3i, the respective hook protrusions 2c disengage from the clip-body part 3, here the connector element 3h, and the rivet part 2 may be pulled out from the clip-body part 3 in a direction opposite to the insertion direction I with reduced force.

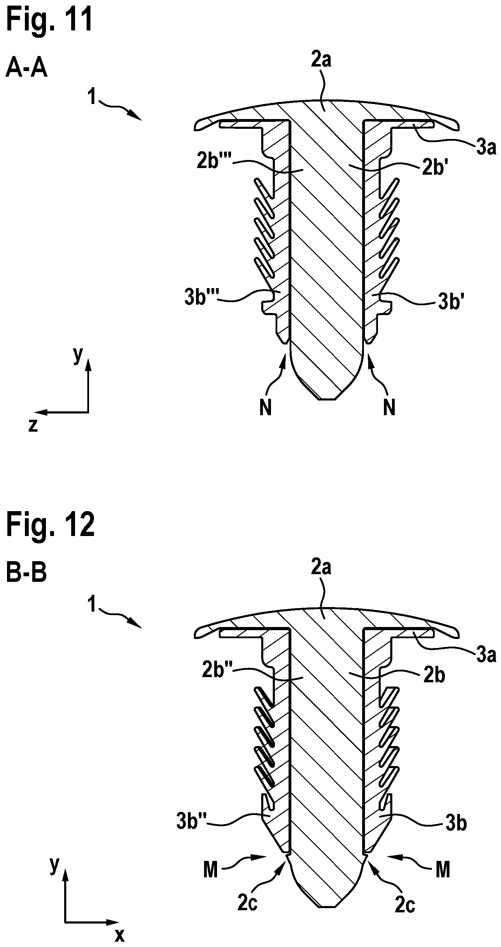

Figs. 11 and 12 show the sectional views corresponding to Figs. 3A and 5, but in the assembled condition. Note the slightly different shape of the clip-body part 3 at predetermined positions M and release positions N.

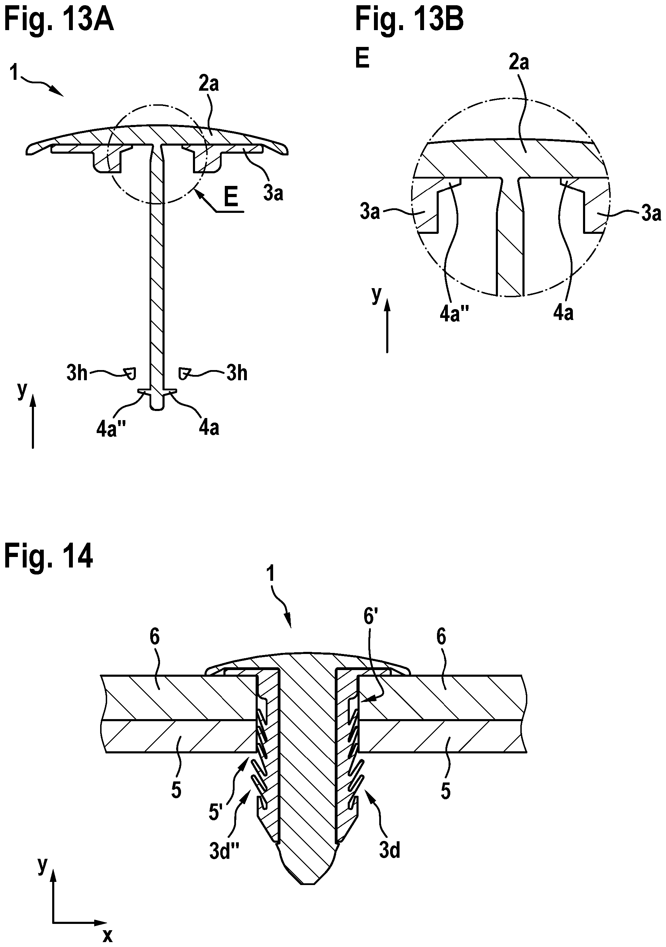

Figs. 13A and 13B correspond to the sectional views of Figs. 4A and 4B. Due to the assembly of the connection device 1, the connector part 4 is broken. As a consequence, rivet part 2 and clip-body part 3 are separated. A part of the connector element 4, i.e. a part of the bridge elements 4a, 4a", is still connected to (the upper portion of) the clip-body part 3, while a separated other part of the connector element 4, i.e. a part of the bridge elements 4a, 4a", is still connected to (the lower portion of) the rivet part 2.

Fig. 14 shows the connection device 1 in assembled condition connecting two parts 5, 6 via insertion of the connection device 1 into aligned through-holes 5', 6' of said parts 5, 6. The snap-in structures 3d, 3d" are, where arranged in the through-holes 5', 6', pressed together, and maintain a larger diameter where pushed through the through-holes 4', 5' completely. Consequently, they hinder the removal of the connection device 1 from the parts 5, 6, thus hinder disconnecting the parts 5, 6 from one another. At least two, here exactly two, lamella elements 3f are pushed completely through said through-holes 5', 6' such that they act as barbs.

## Claims

1. One-piece connection device (1) for connecting two or more parts (5, 6), in particular metal and/or plastic sheet parts, via insertion of the one-piece connection device (1) into aligned through-holes (5', 6') of said parts (5, 6), comprising:
- a rivet part (2) with a head element (2a) and a predetermined number of rib elements (2b, 2b', 2b", 2b‴) extending from the head element (2a) along an insertion direction (I) of the one-piece connection device (1), where the rib elements (2b, 2b', 2b", 2b‴) determine an outer diameter (do) of the rivet part (2);
- a clip-body part (3) with a flange element (3a) and flank elements (3b, 3b', 3b", 3b‴) of said predetermined number, the flank elements (3b, 3b', 3b", 3b‴) extending from the flange element (3a) along said insertion direction (I), where the flank elements (3b, 3b', 3b", 3b‴) have respective snap-in structures (3d, 3d', 3d", 3d‴) on their respective outer sides, and where respective inner sides (3bx, 3bx") of the flank elements (3b, 3b', 3b", 3b‴) determine an inner diameter (di) of the clip-body part (3), which inner diameter (di) corresponds to the outer diameter (do) of the rivet part (2); and
- a connection part (4) that connects a lower portion (R3) of the rivet part (2), the lower portion (R3) of the rivet part (2) being a portion remote from the head element (2a), with an upper portion (C1) of the clip-body part (3), the upper portion (C1) of the clip-body part (3) being a portion comprising the flange element (3a); where
- the connection part (4) is designed as a predetermined breaking point for a movement of the rivet part (2) relative to the clip-body part (3) along said insertion direction (I).

2. One-piece connection device (1) according to the preceding claim,
wherein
a main extension direction of the rib elements (2b, 2b', 2b", 2b‴) is along the insertion direction (I), and the rib elements (2b, 2b', 2b", 2b‴) merge in a central axial area of the rivet part (2), which central axial area extends mainly along said insertion direction (I) and comprises a central axis (A) of the one-piece connection device (1).

3. One-piece connection device (1) according to any one of the preceding claims,
wherein
the rib elements (2b, 2b', 2b", 2b‴) extend in a radial direction, in particular from said central axial area, more than they extend in a circumferential direction that runs across the insertion direction (I) and the radial direction.

4. One-piece connection device (1) according to any one of the preceding claims,
wherein,
at least along a circle with a radius corresponding to the outer diameter (do) of the rivet part (2), the rib elements (2b, 2b', 2b", 2b‴) are separated one from another.

5. One-piece connection device (1) according to any one of the preceding claims,
wherein
the rib elements (2b, 2b', 2b", 2b‴) comprise support surfaces (2bx, 2bx") that are orientated outwardly and that are configured to abut the inner sides (3bx, 3bx") of the flank elements (3b, 3b', 3b", 3b‴) in an assembled condition, preferably with at least one pair, in particular two pairs, of support surfaces (2bx, 2bx") being orientated oppositely.

6. One-piece connection device (1) according to any one of the preceding claims,
wherein
the predetermined number of rib elements (2b, 2b', 2b", 2b‴) and flank elements (3b, 3b', 3b", 3b‴) is at least two, preferably at least four, in particular exactly four.

7. One-piece connection device (1) according to any one of the preceding claims,
wherein
the connection part (4) comprises a number of bridge elements (4a, 4a"), preferably bridge elements (4a, 4a") of said predetermined number, with each bridge element (4a, 4a") connecting rivet part (2) and clip-body part (3), in particular with the bridge elements (4a, 4a") mainly extending in the radial direction.

8. One-piece connection device (1) according to any one of the preceding claims,
wherein
the snap-in structures (3d, 3d', 3d", 3d‴) on the outer sides of the flank elements (3b, 3b', 3b", 3b‴) comprise at least two, preferably at least three or at least four, lamella elements (3f) that are configured for preventing a movement of the clip-body part (3) in the assembled condition in a direction opposite to the insertion direction (I).

9. One-piece connection device (1) according to any one of the preceding claims,
wherein
the flank elements (3b, 3b', 3b", 3b‴) are separated one from another in a middle portion (C2) of the clip-body part (3), which middle portion (C2) is arranged, along the insertion direction (I), between the upper portion (C1) and a lower portion (C3) of the clip-body part (3), which lower portion (C3) of the clip-body part (3) is a portion remote from the flange element (3a), preferably with the middle portion (C2) covering a major share of the overall extension of the clip-body part (3) along the insertion direction (I).

10. One-piece connection device (1) according to any one of the preceding claims,
wherein
the flank elements (3b, 3b', 3b", 3b‴), preferably all flank elements (3b, 3b', 3b", 3b‴), are connected, at the lower portion (R3) of the clip-body part (3), by a connector element (3h).

11. One-piece connection device (1) according to any one of the preceding claims,
wherein
the flank elements (3b, 3b', 3b", 3b‴) extend, in the circumferential direction, more than they extend in the radial direction.

12. One-piece connection device (1) according to any one of the preceding claims,
wherein
a diameter (dg) of the head element (2a) is larger than a diameter (df) of the flange element (3a), the diameter being measured perpendicular to the insertion direction (I).

13. One-piece connection device (1) according to any one of the preceding claims,
wherein
at least one, preferably at least or exactly two, of the rib elements (2b, 2b', 2b", 2b‴) comprise, at the lower portion (R3), respective hook protrusions (2c', 2c‴) that are configured to hook into the clip-body part (3), in particular the connector element (3h), at a predetermined position (M).

14. One-piece connection device (1) according to the preceding claim,
wherein
the clip-body part (3), in particular the connector element (3h), comprises, at a release position (N), which is offset from the predetermined position (M) in the circumferential direction, at least one recess (3i, 3i"), preferably at least or exactly two recesses (3i, 3i"), that allows the hook protrusion (2c', 2c‴) to unhook from the clip-body part (3), in particular the connector element (3h), when the rivet part (2) is rotated along the circumferential direction such that the hook protrusion (2c', 2c‴) is moved from the predetermined position (M) to the release position (N).

15. Method for connecting two or more parts (5, 6), in particular metal and/or plastic sheet parts, by means of a one-piece connection device (1), with the method steps of
- inserting the one-piece connection device (1) into aligned through-holes (5', 6') of said parts (5, 6) along an insertion direction (I), with a first push-in force, until a first part of the one-piece connection device (1) abuts one of the parts (5, 6) to be connected;
- pushing at least a rivet part (2) of the one-piece connection device (1) further along the insertion direction (I) with a second push-in force, which second push-in force is greater than the first push-in force, with the rivet part (2) of the one-piece connection device (1) breaking apart from a clip-body part (3) of the one-piece connection device (1) due to the pushing;
- sliding the rivet part (2) of the one-piece connection device (1) at least partly into the clip-body part (3) of the one-piece connection device (1) along the insertion direction (I).
